# EUROPÄISCHE PATENTANMELDUNG

(11) **EP 1 170 575 A2**
(43) Veröffentlichungstag der Anmeldung: **09.01.2002**
(21) Anmeldenummer: 01109719.3
(22) Anmeldetag: 20.04.2001
(51) Int. Cl.: G01F 1/10

(54) **Flüssigkeitsströmungszähler, wie Wasserzähler, und Wärmezähler**

(30) Priorität: 04.07.2000 DE 10031782
(71) Anmelder: Siemens Building Technologies AG, 8008 Zürich (CH)
(72) Erfinder: Dobeneck, Wolfgang, 99996 Urbach (DE)
(74) Vertreter: Zedlitz, Peter, Dipl.-Inf.

(57) **Zusammenfassung**

Bei einem Flüssigkeitsströmungszähler werden unter Einhaltung von Umweltgesichtspunkten Meßfehler dadurch vermieden bzw. vermindert, daß das Meßkapselunterteil (1) und das Meßkapseloberteil (2), welches die Meßkammer gehäuseartig umgeben, jedenfalls im wesentlichen aus Kunststoff bestehen und daß das Oberteil (2) mit dem Unterteil (1) durch ein Verschlußband (3) verbindbar ist, das Axialbewegungen dieser beiden Teile in Bezug zueinander verhindert, aber eine Drehbewegung des Unterteils (1) in Bezug zum Oberteil (2) in einer entsperrten Stellung erlaubt, in einer Sperrstellung dagegen verhindert.

## Beschreibung

Die Erfindung bezieht sich auf einen Flüssigkeitsströmungszähler der im Oberbegriff des Anspruchs 1 genannten Gattung.

Derartige, im Falle der Anwendung bei Wasser auch "Wasserzähler" dienende Meßgeräte sind bereits bekannt (LUEGER; Lexikon der Bautechnik, 1966, Seiten 700 bis 702). Sie enthalten in einem insbesondere als sogenannte "Meßkapsel" ausgebildeten Gehäuse ein durch Flüssigkeit antreibbares Flügelrad, dessen Bewegungen von einem Meß- bzw. Zählwerk feststellbar sind, so daß in Abhängigkeit von der durch die Meßkammer strömenden Flüssigkeit und daher auch in Abhängigkeit von der Geschwindigkeit des sich drehenden Flügelrads bei gleichbleibendem Strömungsquerschnitt die Menge der durchströmenden Flüssigkeit meßbar ist. Bei solchen "Geschwindigkeitszählern" besteht das Gehäuse üblicherweise aus Gußmetall, insbesondere Messing.

Der Erfindung liegt die Aufgabe zugrunde, trotz einfacher Herstellung und Montage besser Umweltgesichtspunkten zu entsprechend, welche den Kontakt von beispielsweise Trinkwasser mit bestimmten Metallen verbieten, und auch die Justierung des Zählers ohne mechanische Nachbearbeitung von Zählerteilen zu vereinfachen.

Die Erfindung ist im Anspruch 1 gekennzeichnet und in den Unteransprüchen sind bevorzugte Ausbildungen der Erfindung beansprucht. Darüber hinaus sind in der nachfolgenden Beschreibung und auch anhand der Zeichnung besonders bevorzugte Ausbildungen noch näher erläutert.

Gemäß der Erfindung besteht das Zählergehäuse - bestehend aus dem Meßkapselunterteil und dem Meßkapseloberteil - jedenfalls im wesentlichen aus Kunststoff, insbesondere spritzgepreßten oder spritzgegossenen Kunststoffteilen. Beide Teile sind insbesondere ineinandersteckbar. Die Axialbewegbarkeit der beiden Teile in Bezug zueinander wird gemäß der Erfindung durch ein Verschlußband verhindert, welches das Unterteil mit dem Oberteil verbindet. Das Verschlußband läßt in einer entsperrten Stellung dagegen eine Drehbewegung des Meßkapseloberteils in Bezug zum Meßkapselunterteil zu, während eine solche Drehbewegung in einer Sperrstellung des Verschlußbandes verhindert wird.

Nach dem Zusammenbau des Flüssigkeitsströmungszählers kann bei noch entsperrter Stellung des Verschlußbandes das Unterteil in Bezug zum Oberteil soweit verdreht werden, bis das gewünschte Meßergebnis erzielt ist. Durch eine entsprechende Drehbewegung wird nämlich der Strömungsquerschnitt eines Bypasses für die Flüssigkeitsströmung innerhalb des Gehäuses bzw. der Meßkapsel so verändert, bis der gewünschte IST-Wert erreicht ist. Darüber hinaus gelangt die Flüssigkeit nicht in Kontakt mit unerwünschte Substanzen abgebenden Metallteilen des Zählers, so daß auch Umweltgesichtspunkten besser entsprochen wird.

Ein weiterer wesentlicher Vorteil in der Verwendung von Kunststoff besteht darin, daß gut wärmeleitfähige Gehäuseteile, wie Messing, vermieden werden können, so daß der Wärmeübergang von warmer Flüssigkeit nach außen oder von äußerer Wärme in kühle Flüssigkeit durch die Gehäusewand hindurch wesentlich reduziert wird.

Dabei empfiehlt es, sich bei der Auswahl von Kunststoff auf genügend langzeitstabile Kunststoffe auch bei stärkeren Temperaturschwankungen und auf solche mit niedriger Wärmeleitfähigkeit zu achten. Es empfiehlt sich, vor allem folgende Kunststofftypen anzuwenden:

Teilkristallines partiell-aromatisches Polyamid, insbesondere hitzestabilisierte und glasfaserverstärktes Polyphtalamid.

Es ist ratsam, daß auch die mit der Flüssigkeit in Verbindung stehenden anderen Teile des Zählers, darunter das Flügelrad und die Lagerteile für dasselbe, aus Kunststoff bestehen.

Ein besonderer Vorteil bietet die Erfindung bei der Anwendung als Wärmezähler, in dem ein Temperaturfühler durch das Gehäuse, nämlich dem Meßkapselunterteil und/oder -oberteil, insbesondere in einen ringförmigen Strömungskanal tangential eingeführt wird, so daß der Temperaturfühler die Temperatur der durchströmenden Flüssigkeit mißt. Infolge der Verwendung von thermisch gut isolierendem Kunststoff für die beiden Gehäuseteile werden Meßfehler minimiert, so daß auch eine bessere Meßgenauigkeit unabhängig von den Außentemperaturen außerhalb des Zählers möglich ist, wenn die Außentemperatur von der Temperatur der durchströmenden Flüssigkeit abweicht. Dies ist besonders in der modernen Gebäudetechnik wichtig, bei der Strömungsmesser dieser Art auch als Warmwasserverbrauchszähler angewendet werden.

Die Flüssigkeitsführung im Meßkapselzähler beginnt im Einrohranschlußteil koaxial in einem ringförmigen Raum zwischen Meßkapselunterteil und Meßkammer.

Das Flügelrad befindet sich in einer korbartigen Meßkammer, die mit schrägen radialen Einströmschlitzen versehen und im Bodenbereich mit Ausnahme der unteren Lagerstelle für das Flügelrad offen gestaltet ist.

An die Meßkammer vom Boden wegführend ist ein Bodenteil angeordnet, das seinerseits drehsicher in das Meßkapselunterteil einsteckbar ist und die Dichtungen für die innere Flüssigkeitsführung trägt. Dieses Bodenteil leitet die Flüssigkeit zur inneren Bohrung des Einrohranschlußteils, womit sie den Zähler verläßt. Meßkammer und Bodenteil sind koaxial ineinander verdrehbar gestaltet, so daß beim Verdrehen eine Öffnung zwischen der äußeren und der inneren Wasserführung stetig geöffnet bzw. geschlossen werden kann und somit eine Bypass-Wirkung zur Meßkammer erreicht wird.

Diese Verstellbewegung wird von außen durch das Verdrehen des Meßkapseloberteils bewirkt.

Das Meßkapseloberteil ist formschlüssig mit dem Meßkammerteil verbunden und trägt die obere Lagerstelle für das Flügelrad.

Das Meßkapselunterteil sollte das Meßkapseloberteil mindestens teilweise ringförmig umgeben; das Unterteil weist hier eine Durchbrechung in Form eines Langloches auf. An der entsprechenden axialen Stelle ist das Meßkapseloberteil mit einer im wesentlichen ringsumlaufenden rinnenförmigen Ausnehmung zur Aufnahme des Verschußbandes versehen. Das Verschlußband sollte ein Kopfstück aufweisen, das formschlüssig in die sich in Umfangsrichtung erstreckende Durchbrechung im Meßkapselunterteil eindrückbar und dort festklemmbar oder beispielsweise mittels einer Schraube festschraubbar ist.

Das Flügelrad weist insbesondere ein oder mehrere magnetische Elemente auf, welche durch elektromagnetische Wirkung in Funktionsverbindung zu einem Meß- oder Zählwerk stehen, das sich insbesondere oberhalb der Meßkammer inbesondere im Innenraum einer Abdeckhaube befindet, welche mit dem Meßkapselunter-und/oder -oberteil verbindbar ist.

Dabei kann es sich um ein mechanisches Zählwerk, aber auch um ein elektronisches Meßwerk handeln.

Die Erfindung wird nun anhand der Zeichnung im folgenden noch näher erläutert. Dabei zeigen:
- Figur 1: die Außenansicht eines erfindungsgemäßen Flüssigkeitsströmungszählers im eingebauten Zustand an einer Rohrleitung;
- Figur 2: einen Querschnitt EE durch den Zähler;

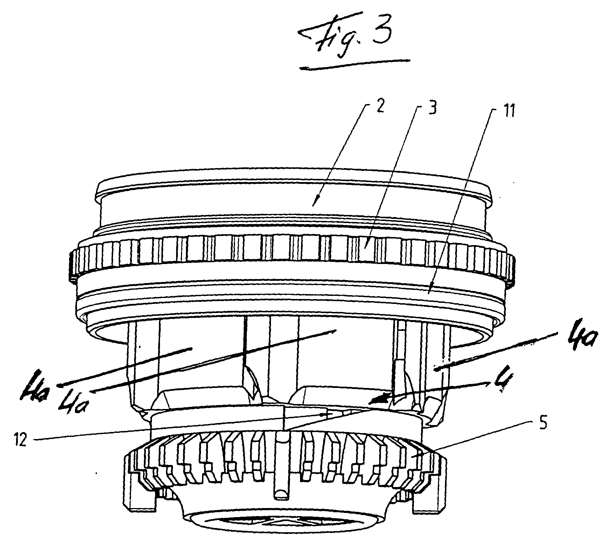

- Figur 3: eine Ansicht auf die inneren Meßkapselteile, bestehend aus der Meßkammer mit Bodenteil und dem Meßkapseloberteil;
- Figur 4: eine Ansicht auf ein Verschlußband;
- Figur 5: eine Aufsicht auf einen Teil eines als Wärmezähler dienenden Zählers mit integriertem Temperaturfühler;
- Figur 6: einen Schnitt FF durch diesen Wärmezähler;
- Figur 7: einen weiteren Schnitt GG durch den Wärmezähler und
- Figur 8: eine Ansicht auf die inneren Meßkapselteile des Wärmezählers mit eingebautem Temperaturfühler.

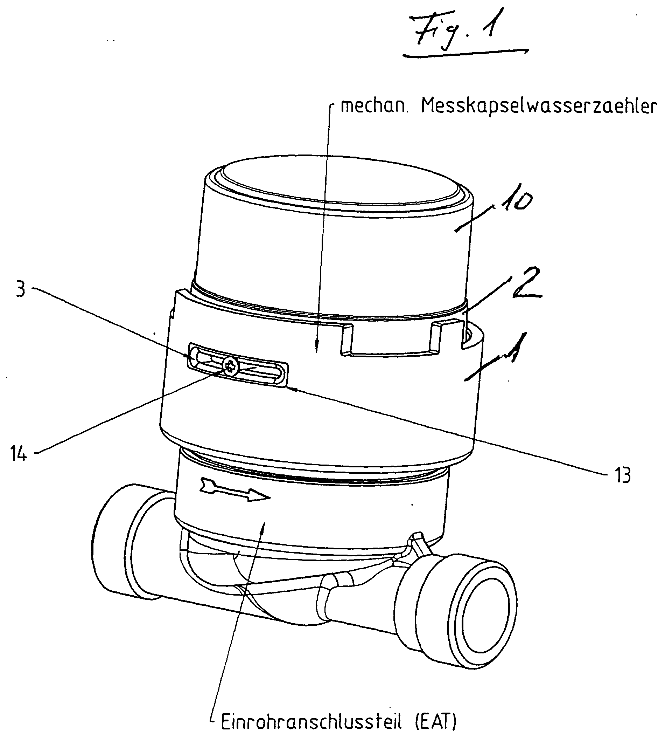

In Figur 1 ist ein mechanischer Meßkapselwasserzähler im endgültig an ein Einrohranschlußteil (EAT) montiertem Zustand dargestellt. Durch die fensterartige und als Langloch ausgebildete Durchbrechung 13 besteht Zutritt zu einem Verschlußband 3 zwischen dem Meßkapselunterteil 1 und dem Meßkapseloberteil 2. Die Feststellschraube 14 dient zum Feststellen des Verschlußbandes und der Lage des Unterteils 1 in Bezug zum Oberteil 2 nach der Justierung auf einem Prüfstand. Der Meßkapselunterteil 1 mit dem 2 Zoll-Gewinde dient als Basisteil für alle weiteren Bauelemente des Zählers.

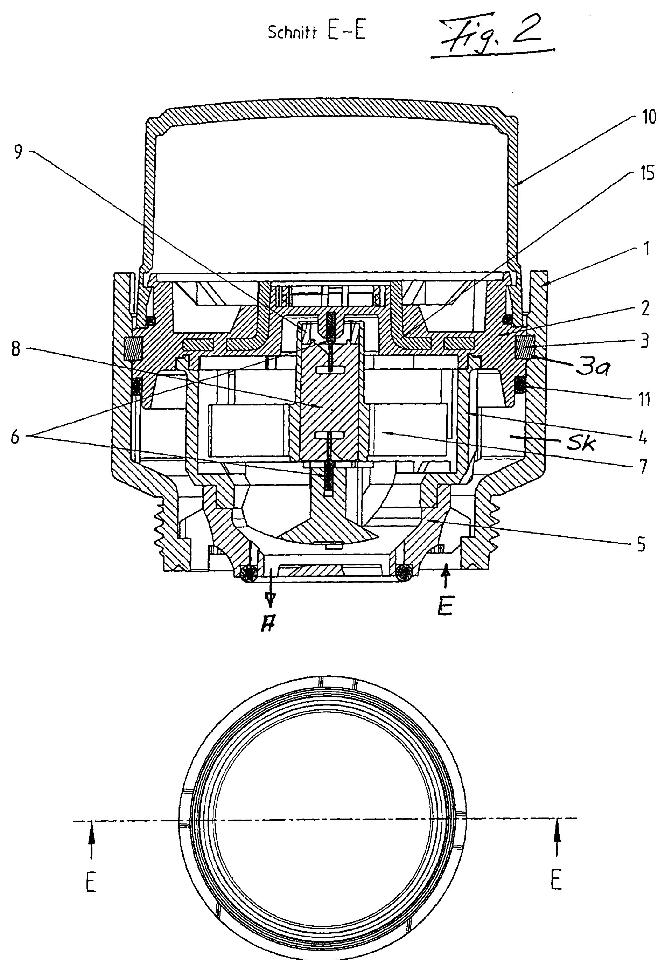

Die eigentliche Meßkammer wird gemäß Figur 2 aus einem Bodenteil 5, dem Meßkammerteil 4 mit dem unteren Lager 6 des Flügelrads 8 sowie dem Meßkapseloberteil 2 gebildet. Das Meßkammerteil 4 und das Bodenteil 5 stellen eine Art "Korb" dar, da das Meßkammerteil 4 schräggestellte Einströmschlitze aufweist, welche Verbindungskanäle aus der Meßkammer in den Strömungskanal SK herstellen, welcher vom Meßkammerteil 4 und dem Bodenteil 5 einerseits und dem Meßkapselunterteil 1 andererseits radial innen und radial außen begrenzt ist. Das zu messende Wasser strömt koaxial über den Einlaß E in diesen Strömungskanal SK ein und aus der Meßkammer über den ringförmigen Austrittskanal A im Bodenteil 5 wieder aus.

Die strömende Flüssigkeit treibt das Flügelrad 8 an, das mit dem oberen Lagerstift 6 im Meßkapseloberteil 2 gelagert ist. Die Drehbewegung des Flügelrads 7 mit der Lagerbuchse 8 wird über das magnetische Element 9 an der oberen Stirnseite der Lagerbuchse 8 zu einem magnetischen Element in einem nicht dargestellten mechanischen Zählwerk übertragen, das in der insbesondere durchsichtigen Abdeckkapsel oder Abdeckhaube 10 beherbergt ist. Das Meßkapseloberteil 2 weist einen magnetischen Abschirmring 15 auf. Die Abdeckhaube 10 ist auf das Oberteil 2 aufgesteckt.

Bei der Zählermontage wird zuerst das Bodenteil 5 in das Meßkapselunterteil 1 eingesetzt; dabei sitzt es axial auf und wird durch mehrere Stege drehsicher gehalten. Danach wird das Meßkammerteil 4 auf das Bodenteil 5 aufgesetzt, so daß eine Drehbewegung relativ zueinander möglich und daher der Durchtrittsquerschnitt der Bypassöffnung 12 zwischen dem oberen Flansch des Bodenteils 5 und dem unteren Flansch des Meßkammerteils 4 mehr oder weniger freigegeben wird. Das Oberteil 2 wird mit dem Dichtungs-O-Ring 11 so in den Unterteil 1 eingesetzt, daß seine Geometrie an der Unterseite formschlüssig in die Gegenseite des Meßkammerteils 4 eingreift.

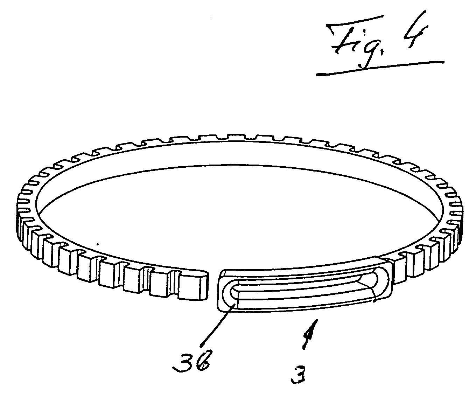

Die Axialsicherung der Baugruppe übernimmt das in Figur 4 dargestellte Verschlußband 3, das durch die Durchbrechung 13 des Unterteils 1 in eine ringförmige Nut 3a an der Außenseite des Oberteils 2 eingesetzt wird, bis das verbreiterte Kopfstück 3b in die Durchbrechung 13 eingedrückt werden kann. Während die Axialbewegung zwischen Unterteil 1 und Oberteil 2 hierdurch gesperrt wird, besteht noch eine gewisse Drehbewegbarkeit dieser beiden Teile relativ zueinander um diejenige Strecke, um welche die in das Kopfstück 3b eingeschraubte Feststellschraube 14 in dem Schlitz des Kopfstücks 3b von einem zum anderen Ende beim Verdrehen bewegbar ist. Durch Verdrehen ist die Größe des Durchtrittsquerschnitts des Bypasses 12 für die Flüssigkeitsströmung änderbar und die Justierung durchführbar. Dabei weist der Meßkapseloberteil 2 eine radiale Bohrung auf, die gemäß Figur 1 einem halb geöffnetem Bypass entspricht und nach beiden Seiten drehbar ist. Nach erfolgter Justierung wird die Feststellschraube 14 festgeschraubt, so daß dann das Unterteil 1 nicht mehr im Bezug zum Oberteil 2 drehbewegbar ist. Entsprechend ist nun der Durchtrittsquerschnit des Bypasses arretiert.

Schließlich wird das Zählwerk mit der Deckhaube 10 aufgesetzt, wodurch die Zählermontage beendet ist.

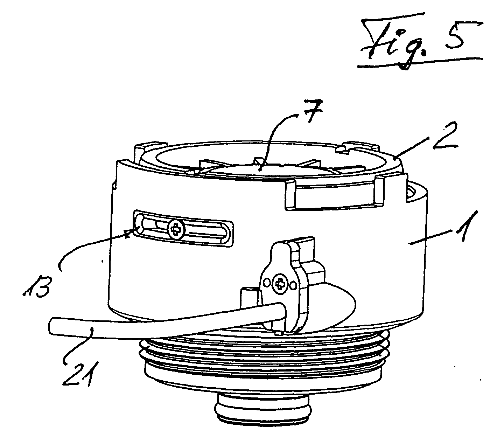

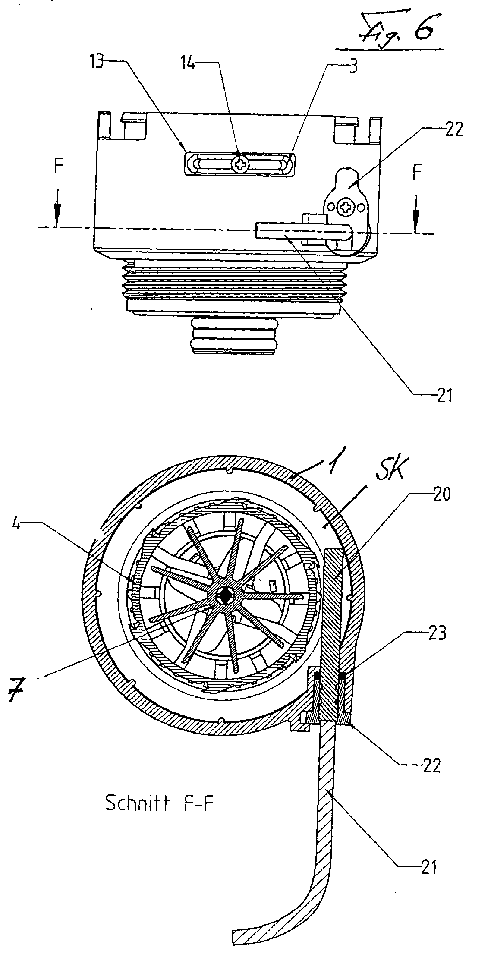

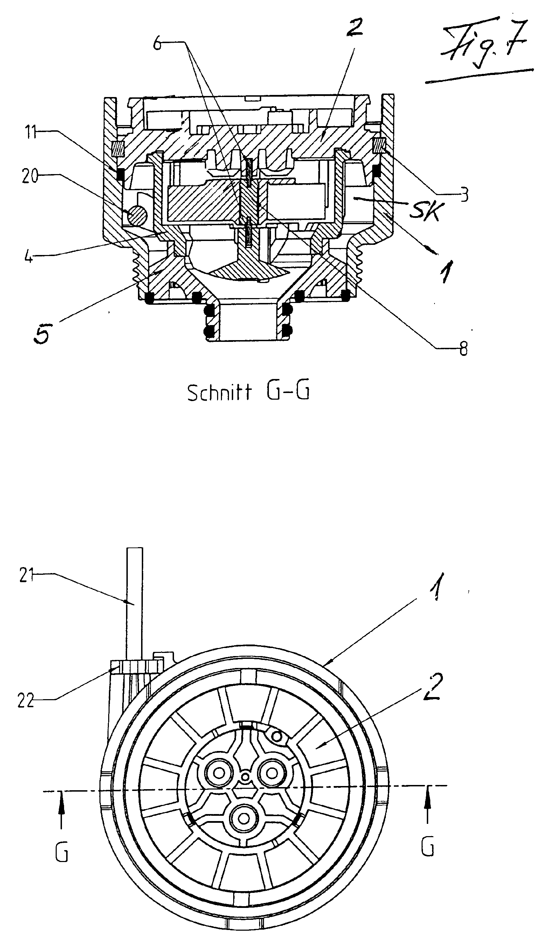

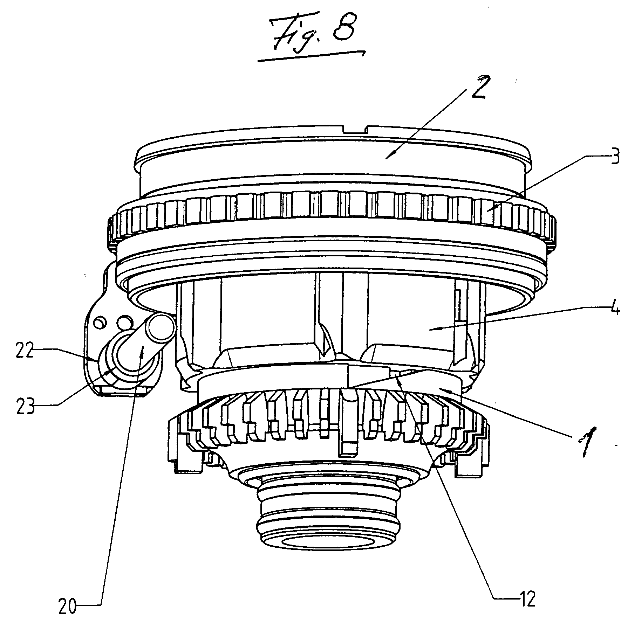

Für die in den Figuren 5 bis 8 gezeigten Ausbildungen der Erfindung als Warmwasserzähler gelten die entsprechenden Maßnahmen. Dabei ist eine elektrische Anschlußleitung 21 durch eine Durchbrechung im Meßkapselunterteil 1 bis in den Strömungskanal SK (Figur 6) verlegt, so daß hierdurch der im Haltelement 22 festgehaltene tangential eingeführte Temperaturfühler 20 elektrisch mit einer hier nicht dargestellten Auswerteelektronik verbindbar ist. Zwischen dem Unterteil 1 und dem Halteelement 22 in Form einer Haltebuchse ist eine Dichtung 23 eingesetzt.

## Patentansprüche

1. Flüssigkeitsströmungszähler mit einem Gehäuse bzw. Meßkapselunterteil (1) und einem Gehäuse- bzw. Meßkapseloberteil (2),
mit mindestens einem innerhalb des Gehäuses bzw. der Meßkapsel angeordneten Meßkammerteil mit einem Flügelrad (7),
mit einem Strömungskanal (SK) zwischen Gehäuse bzw. Meßkapsel und Meßkammerteil in im wesentlichen koaxialer Richtung zur Flügelradachse, bei dem das Flügelrad (7) durch die Flüssigkeit antreibbar ist, welche im Meßbetrieb durch Schlitze (7a) des Meßkammerteils insbesondere tangential und/oder radial auf die Flügel des Flügelrads (7) strömt,
und mit einem in Abhängigkeit von der Flügelradbewegung arbeitenden Zählaggregat,
**dadurch gekennzeichnet,**
**daß** das Meßkapselunterteil (1) und das Meßkapseloberteil (2) jedenfalls im wesentlichen aus Kunststoff bestehen,
und **daß** das Meßkapseloberteil (2) mit dem Meßkapselunterteil (1) durch ein Verschlußband (3) verbindbar ist, das Axialbewegungen dieser beiden Teile in Bezug zueinander verhindert, eine Drehbewegung des Meßkapseloberteil (2) in Bezug zum Meßkapselunterteil (1) in einer entsperrten Stellung dagegen erlaubt, in einer Sperrstellung aber verhindert.

2. Zähler nach Anspruch 1,
**dadurch gekennzeichnet,**
**daß** das Meßkammerteil ein die Schlitze (4a) aufweisendes korbartiges Meßkammerteil (4) für das Flügelrad (8) und einen Bodenteil (5) aufweist, der die Ein- und Auslaßöffnung für die Flüssigkeit aufweist.

3. Zähler nach Anspruch 1 und 2,
**dadurch gekennzeichnet,**
**daß** das Meßkammerteil (4) in den Bodenteil (5) und dieses in den Meßkapselunterteil (1) einsteckbar sind.

4. Zähler nach einem der vorhergehenden Ansprüche,
**dadurch gekennzeichnet,**
**daß** das Meßkammerteil, das Meßkapselunterteil (1) und das Meßkapseloberteil (2) Spritzguß- oder Spritzpreßteile sind.

5. Zähler nach einem der vorhergehenden Ansprüche,
**dadurch gekennzeichnet,**
**daß** das Flügelrad (8) ein Spritzguß- oder Spritzpreßteil ist.

6. Zähler nach einem der vorhergehenden Ansprüche,
**dadurch gekennzeichnet,**
**daß** der Meßkapselunterteil (1) das Meßkapseloberteil (2) mindestens teilweise ringsum umgibt und eine in Form eines Langloches ausgebildete Durchbrechung (13) und das Meßkapseloberteil (2) eine im wesentlichen ringsum laufende rinnenförmige Ausnehmung (3a) zur Aufnahme des Verschlußbandes (3) aufweisen.

7. Zähler nach einem der vorhergehenden Ansprüche,
**dadurch gekennzeichnet,**
**daß** das Verschlußband (3) einen Kopfteil (3b) aufweist, der formschlüssig in die Durchbrechung (13) im Meßkapselunterteil (1) längsbewegbar eindrückbar und dort festklemmbar oder festschraubbar ist.

8. Zähler nach einem der vorhergehenden Ansprüche,
**dadurch gekennzeichnet,**
**daß** Schlitze (4a) in Bezug auf die Radialebenen und/oder Orthogonalebene auf die Flügelradachse schräggestellt sind.

9. Zähler nach einem der vorhergehenden Ansprüche,
**dadurch gekennzeichnet,**
**daß** der Bodenteil (5) und/oder das Meßkammerteil (4) eine Bypassöffnung (12) für die Flüssigkeit aufweisen, deren Durchtrittsquerschnitt sich beim Verdrehen des mit dem Bodenteil (5) drehsicher verbundenen Meßkapselunterteils (1) in Bezug zum Meßkapseloberteil (2) und/oder Meßkammerteil (4) ändert.

10. Zähler nach einem der vorhergehenden Ansprüche,
**dadurch gekennzeichnet,**
**daß** das Flügelrad (8) mindestens ein magnetisches Element(9) aufweist, welches mit einem Meß- oder Zählwerk in Funktionsabhängigkeit steht.

11. Zähler nach einem der vorhergehenden Ansprüche,
**dadurch gekennzeichnet,**
**daß** das Meß- oder Zählwerk innerhalb einer Abdeckhaube (10) beherbergt ist, welches mit dem Meßkapselunterteil (1) und/oder -oberteil (2) verbindbar ist.

12. Zähler nach einem der vorhergehenden Ansprüche,
**dadurch gekennzeichnet,**
**daß** ein elektronisches Meß- oder Zählwerk verwendet ist.

13. Zähler nach einem der vorhergehenden Ansprüche,
**dadurch gekennzeichnet,**
**daß** zur Verwendung als Wärmezähler in einen ringförmigen Strömungskanal (SK) tangential ein Temperaturfühler (20) eingesetzt ist.

14. Zähler nach einem der vorhergehenden Ansprüche,
**dadurch gekennzeichnet,**
**daß** für den Meßkapselunterteil (1) und -oberteil (2) ein teilkristallines partiell-aromatisches Polyamid (hitzestabilisiert und glasfaserverstärkt) als Kunststoff verwendet ist.
